Europäisches Patentamt

European Patent Office

Office européen des brevets

(19)

(11) Publication number: **0 313 663**

**A1**

(12)

# EUROPEAN PATENT APPLICATION

published in accordance with Art. 158(3) EPC

(21) Application number: **88903933.5**

(22) Date of filing: **27.04.88**

Data of the international application taken as a basis:

(86) International application number:
**PCT/JP88/00418**

(87) International publication number:
**WO88/08561 (03.11.88 88/24)**

(51) Int. Cl.³: **G 05 B 19/407**
**G 05 D 3/12, B 25 J 9/16**

(30) Priority: **30.04.87 JP 107260/87**

(43) Date of publication of application:
**03.05.89 Bulletin 89/18**

(84) Designated Contracting States:
**DE FR GB**

(71) Applicant: **FANUC LTD**
**3580, Shibokusa Aza-Komanba Oshino-mura**
**Minamitsuru-gun Yamanashi 401-05(JP)**

(72) Inventor: **SUGIMURA, Hiroshi c/o Fanuc Mansion**
**Harimomi 5-302**
**3536 Shibokusa,Oshino-mura,Minamitsuru-gun**
**Yamanshi(JP)**

(74) Representative: **Billington, Lawrence Emlyn et al,**
**HASELTINE LAKE & CO Hazlitt House 28 Southampton**
**Buildings Chancery Lane**
**London WC2A 1AT(GB)**

(54) **ROBOT CONTROLLER.**

(57) A robot controller according to this invention is designed to use a given speed command to drive a servo motor (4) which forms a drive mechanism for robot axes. A filter circuit (1) comprising a plurality of load filter stages each having a given acceleration pattern of input/output characteristic is employed to perform smooth positioning control in a required range with a reasonable tracking accuracy maintained.

# Fig. 1

FILTER CIRCUIT → ACCELERATION/DECELERATION CIRCUIT → ACCELERATION CONTROL CIRCUIT → SM → EACH AXIS MECHANISM OF ROBOT

ACTUAL VELOCITY SIGNAL

VELOCITY COMMAND

-1-

## DESCRIPTION

## ROBOT CONTROL APPARATUS

### Technical Field

This invention relates to a robot control apparatus having an improved filter function for smoothly controlling acceleration and deceleration.

### Background Art

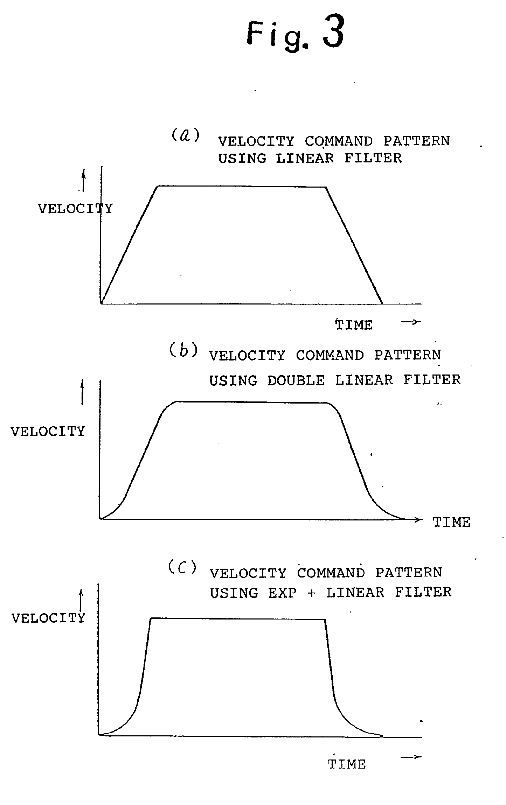

When a commanded velocity is inputted in ordinary acceleration/deceleration control, control is performed such that the commanded velocity is software-processed to attain the commanded velocity at a predetermined acceleration time, and such that a stop is applied after a deceleration time set at the same time constant. In this way a travelling distance is set that is proportional to the product of the commanded velocity and a commanded time. Conventionally, an independent velocity command is outputted to the drive of each axis of a robot by a linear filter, a double linear filter or a filter comprising a combination of the linear filter and an EXP filter, which causes velocity to vary in the manner of an exponential function, of the kind shown in Fig. 3. With the filters of Figs. 3(a) and (b), software processing can be performed with ease and positioning accuracy is high, while smooth acceleration and deceleration can be readily performed with the filter of Fig. 3(c). For these reasons, these filters are advantageous in that the precision of a trajectory can be maintained with ease in a case where a hand is moved upon setting a target path.

With a robot control apparatus in which a velocity command is formed by such acceleration/deceleration control to control velocity along each drive axis of a robot so that the position of the robot hand can be controlled, the amount of change in position with time (i.e., velocity), relative to a set target position, is dealt with as the input to an acceleration/deceleration circuit. Consequently, even though it is attempted to maintain the precision of a trajectory by an acceleration/deceleration filter, there is a fixed limit and, when the precision of a trajectory is improved, the shock sustained by the robot hand is greater. When it is attempted to eliminate shock by smoothening the change in velocity, the deviation from the target path increases.

Disclosure of the Invention

The present invention has been devised to solve the foregoing problems and its object is to provide a robot control apparatus in which the amount of deviation of a trajectory is minimized and the smoothness of robot hand motion assured.

According to the present invention, there is provided a robot control apparatus for forming a velocity command by acceleration/deceleration control to control velocity along each drive axis of a robot and carry out positional control of a hand of the robot, characterized by comprising memory means for storing load coefficients regarding velocity commands, arithmetic means for computing a load average with regard to a velocity command within a fixed time, and filter means comprising a load filter of a plurality of stages having input/output characteristics of a predetermined acceleration pattern for each axis of the robot based on the results of computations performed by the arithmetic means.

Thus, the robot control apparatus of the invention makes it possible to set a large value for maximum acceleration and minimize the rate of change in acceleration, whereby the accuracy of a trajectory is improved and the acceleration pattern is smoothened to eliminate shock applied to the robot hand.

Brief Description of the Drawings

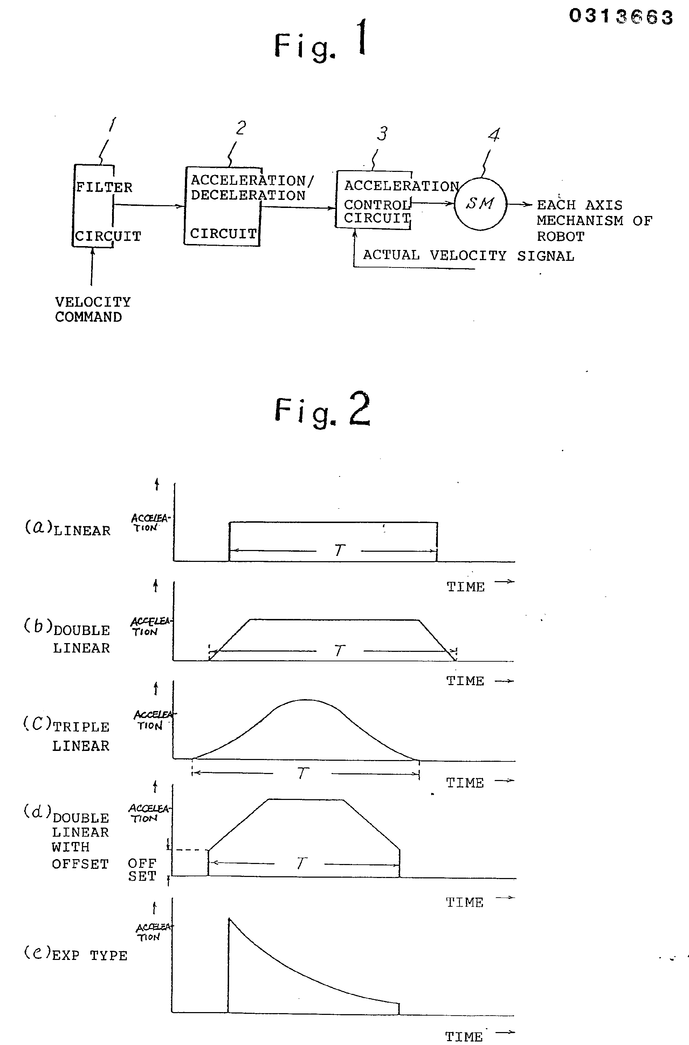

Fig. 1 is a block diagram illustrating an embodiment of the invention, Fig. 2 is a view illustrating acceleration characteristics regarding five load filters, and Fig. 3 is a view showing the characteristics of conventional acceleration/deceleration filters.

Best Mode for Carrying Out the Invention

An embodiment of the invention will now be described in detail with reference to the drawings.

Fig. 1 is a block diagram illustrating the control mechanism for one axis of a robot drive mechanism.

A filter circuit 1 to which a velocity command is

-4-

inputted operates for each axis and each forms a load filter that stipulates an acceleration pattern by a load coefficient stored in advance. The load filter is characterized by the input/output characteristic indicated by the following equation:

$$V_g(i) = \sum \{W(i) * I(i)\} / \sum W(i)$$

where $V_g(i)$ represents the filter output, $W(i)$ an i-th load coefficient, and $I(i)$ an i-th filter input. Further, i is decided by the filter length N of the filter circuit 1 as follows:

$$1 \leq i \leq N$$

Fig. 2 illustrates output characteristics in a case where an inpulse is applied to the filter circuit. Here a load coefficient forming a linear filter shown in Fig. 2(a), by way of example, forms the same acceleration with regard to all filter lengths. As a result, the input/output characteristics actually indicate a pure average. A filter constructed by a load coefficient of the kind shown in Fig. 2(b) forms a double linear filter.

Plural stages of the filter circuit 1 for thus outputting velocity commands having a predetermined acceleration pattern to an acceleration/deceleration circuit based on a velocity command within a fixed time are realized inclusive of functions for a case in which the conventional acceleration/deceleration filters are used for construction, and the precision of a trajectory can be improved by the maximum acceleration of the filter circuit.

More specifically, a velocity command of a servomotor 4 supplied to a servo circuit, which includes a velocity control circuit 3 to which an actual velocity signal is fed back, is shaped by the load filter ahead of the acceleration/deceleration circuit 2. The filter circuit 1, which is formed in software fashion, has a plurality of lengths with regard to an ordinary pulse distribution rate and produces an output at a period of, e.g., 16 msec. The maximum acceleration settable by this load filter is decided by the maximum value among the load coefficients. Though the maximum accleration is fixed in the form 1/N with a linear filter, the maximum velocity component can be set freely in dependence upon the filter load coefficient. The larger this maximum value, the higher the precision of the trajectory.

Since the smoothness of motion declines in proportion to the maximum value of the rate of change in acceleration, it is preferred that the maximum value of the abovementioned load coefficient be decided within a range in which this value is not made large. That is, since filters such as a triple linear filter, a double linear filter with offset and an EXP filter shown in Figs. 2(c), (d) and (e) can be constructed with ease in accordance with the present invention, it is possible to carry out optimum accleration/deceleration control decided by robot position, attitude and the type of robot activity. This makes it possible to improve the precision of a trajectory without detracting from positioning speed.

Though an embodiment of the present invention has been described, the invention is not limited thereto and can be modified in a variety of ways without departing from the scope of the claims.

Industrial Applicability

The robot control apparatus of the present invention smoothly controls the positioning of a robot hand driven by a plurality of motion axes driven and controlled independently in space.

CLAIMS:

1.  A robot control apparatus for forming a velocity command by acceleration/deceleration control to control velocity along each drive axis of a robot and carry out positional control of a hand of said robot, comprising:

memory means for storing load coefficients regarding velocity commands;

arithmetic means for computing a load average with regard to a velocity command within a fixed time; and

filter means comprising a load filter of a plurality of stages having input/output characteristics of a predetermined acceleration pattern for each axis of said robot based on the results of computations performed by the arithmetic means.

2.  A robot control apparatus according to claim 1, characterized in that an acceleration pattern is decided by a load coefficient of each stage of said load filter.

0313663

# Fig. 1

FILTER CIRCUIT (1) → ACCELERATION/ DECELERATION CIRCUIT (2) → ACCELERATION CONTROL CIRCUIT (3) → SM (4) → EACH AXIS MECHANISM OF ROBOT

VELOCITY COMMAND

ACTUAL VELOCITY SIGNAL

# Fig. 2

(a) LINEAR

ACCELEATION

T

TIME →

(b) DOUBLE LINEAR

ACCELEATION

T

TIME →

(c) TRIPLE LINEAR

ACCELEATION

T

TIME →

(d) DOUBLE LINEAR WITH OFFSET

ACCELEATION

OFFSET

T

TIME →

(e) EXP TYPE

ACCELEATION

TIME →

# Fig. 3

(a) VELOCITY COMMAND PATTERN
USING LINEAR FILTER

VELOCITY

TIME →

(b) VELOCITY COMMAND PATTERN
USING DOUBLE LINEAR FILTER

VELOCITY

TIME

(C) VELOCITY COMMAND PATTERN
USING EXP + LINEAR FILTER

VELOCITY

TIME →

# INTERNATIONAL SEARCH REPORT

0313663

International Application No  PCT/JP88/00418

## I. CLASSIFICATION OF SUBJECT MATTER (if several classification symbols apply, indicate all) 6

According to International Patent Classification (IPC) or to both National Classification and IPC

Int. Cl$^4$  G05B19/407, G05D3/12, B25J9/16

## II. FIELDS SEARCHED

### Minimum Documentation Searched 7

| Classification System | Classification Symbols |
|---|---|
| IPC | G05B19/407, G05D3/12 |

### Documentation Searched other than Minimum Documentation to the Extent that such Documents are Included in the Fields Searched 8

| | | |
|---|---|---|
| Jitsuyo Shinan Koho | 1971 — 1988 | |
| Kokai Jitsuyo Shinan Koho | 1971 — 1988 | — |

## III. DOCUMENTS CONSIDERED TO BE RELEVANT 9

| Category * | Citation of Document, 11 with indication, where appropriate, of the relevant passages 12 | Relevant to Claim No. 13 |
|---|---|---|
| Y | JP, A, 55-65046 (Mitsubishi Heavy Industries, Ltd.) 16 May, 1980 (16.05.80) Page 2, upper right column, line 5 to page 3, upper left column, line 8, Fig. 3 (Family: none) | 1, 2 |
| Y | JP, A, 60-209812 (Fanuc Ltd.) 22 October, 1985 (22.10.85) Page 3, lower left column, lines 3 to 15, Fig. 7 (Family: none) | 1, 2 |
| Y | JP, A, 59-90107 (Fanuc Ltd.) 24 May, 1984 (24.05.84) Page 3, upper right column, line 10 to page 4, upper left column, line 12, Fig. 8 (Family: none) | 1, 2 |

* Special categories of cited documents: 10

"A"  document defining the general state of the art which is not considered to be of particular relevance

"E"  earlier document but published on or after the international filing date

"L"  document which may throw doubts on priority claim(s) or which is cited to establish the publication date of another citation or other special reason (as specified)

"O"  document referring to an oral disclosure, use, exhibition or other means

"P"  document published prior to the international filing date but later than the priority date claimed

"T"  later document published after the international filing date or priority date and not in conflict with the application but cited to understand the principle or theory underlying the invention

"X"  document of particular relevance; the claimed invention cannot be considered novel or cannot be considered to involve an inventive step

"Y"  document of particular relevance; the claimed invention cannot be considered to involve an inventive step when the document is combined with one or more other such documents, such combination being obvious to a person skilled in the art

"&"  document member of the same patent family

## IV. CERTIFICATION

| Date of the Actual Completion of the International Search | Date of Mailing of this International Search Report |
|---|---|
| July 11, 1988 (11.07.88) | July 25, 1988 (25.07.88) |

| International Searching Authority | Signature of Authorized Officer |
|---|---|
| Japanese Patent Office | |

Form PCT/ISA/210 (second sheet) (January 1985)